# EUROPEAN PATENT SPECIFICATION

(11) **EP 0 456 156 B1**
(45) Date of publication and mention of the grant of the patent: **02.08.1995**
(21) Application number: 91107311.2
(22) Date of filing: 06.05.1991
(51) Int. Cl.: B26D 1/60

(54) **Cutting device, particularly for the continuous cutting of cardboard**
Schneidvorrichtung, insbesondere zum kontinuierlichen Schneiden von Pappe
Dispositif de coupe, notamment pour la coupe continuelle du carton

(30) Priority: 08.05.1990 IT 5934090
(43) Date of publication of application: 13.11.1991
(73) Proprietor: IMMOBILIARE PANOTEC S.r.l., I-31038 Paese - Fraz. Castagnole (TV) (IT)
(72) Inventor: Fabris, Bruno, I-31038 Paese (Treviso) (IT)
(74) Representative: Modiano, Guido, Dr.-Ing.

(56) References cited:
- WO-A-85/03751
- FR-A- 356 785
- FR-A- 395 995
- FR-A- 2 260 412
- GB-A- 2 008 282
- GB-A- 2 108 034
- US-A- 4 590 812

## Description

The present invention relates to a cutting device particularly usable for the continuous cutting of cardboard.

Cutters are currently known which are suitable for the transverse cutting of cardboard; said cutters are constituted by a cylinder, which is arranged transversely to the cardboard infeed direction, and have, at the lateral surface, a blade which is not arranged at a generatrix but along an oblique axis so as to achieve, according to a rotation rate which is preset according to the cardboard infeed rate, cutting along an axis which is transverse to said cardboard.

Said known cutters have considerable disadvantages: first of all, the cost of the mechanical cutting unit is high, since it requires very precise adjustments and settings, and considerable limitations in the cardboard thickness which can actually be cut have furthermore been observed.

Cutters are furthermore known which, in order to cut thick cardboards, lock said cardboards while the cutter performs a guillotine cut thereon.

Even these known types of cutter have disadvantages, since locking the cardboard in order to cut it considerably extends the times in relation to subsequent processes to which the cardboard must be subjected.

Also known from GB-A-2,108,034 is a cutting device for the transverse cutting of cardboard webs as defined in the precharacterizing part of claim 1.

The aim of the present invention is therefore to eliminate the disadvantages described above in known types by providing a device which allows to perform cutting along an axis which is transverse to the cardboard infeed axis, said cardboard continuing to advance during said operation, said cutting being obtainable even for high-thickness cardboards.

Within the above aim, an important object is to provide a device which has modest manufacturing costs since it does not require particular adjustments.

Not least object is to provide a device which associates with the preceding characteristics that of being safe and reliable in use.

This aim, these objects and others which will become apparent hereinafter are achieved by a cutting device for the transverse cutting of cardboard webs as defined in the appended claims.

Further characteristics and advantages of the invention will become apparent from the detailed description of a particular embodiment, illustrated only by way of non-limitative example in the accompanying drawings, wherein:

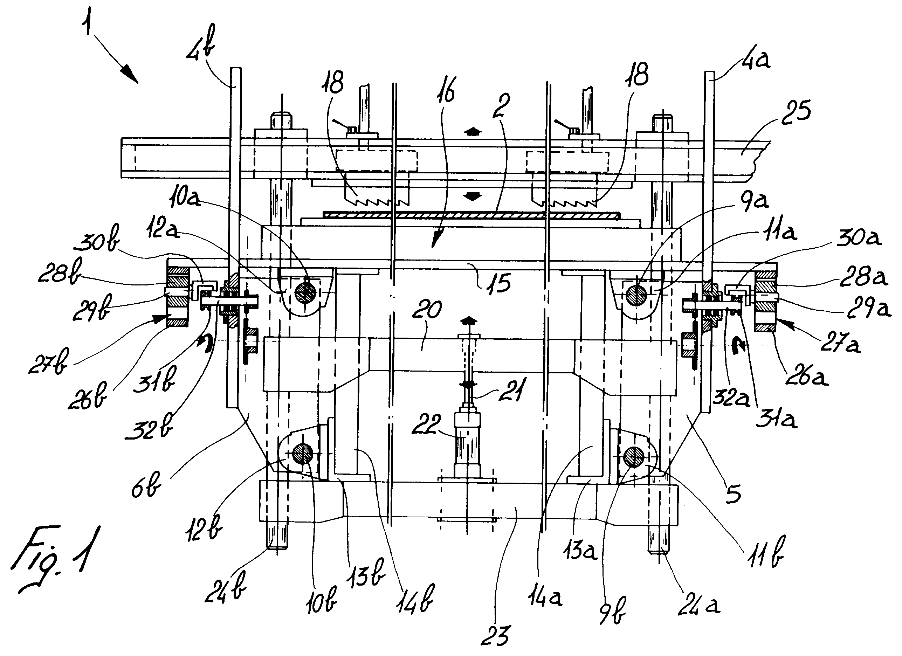

figure 1 is a sectional view of the device, taken along a transverse plane;

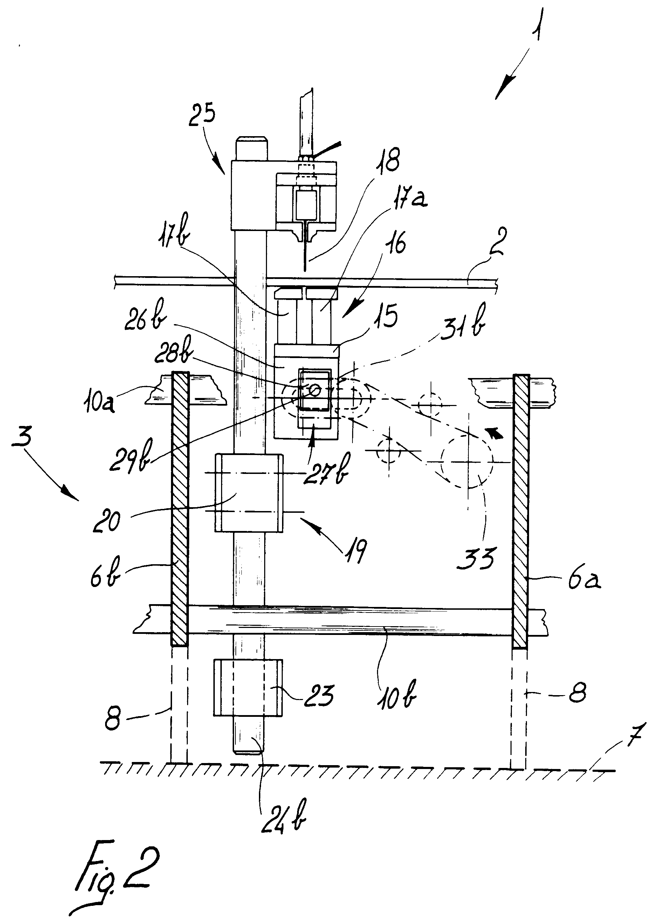

figure 2 is a partial side view of the device, schematically indicating the elements suitable for providing motion to the means for the synchronous traction of the blade and of the counter-blade during the cardboard cutting step.

With reference to the above figures, the reference numeral 1 indicates the cutting device particularly usable for the continuous cutting of a cardboard sheet 2, which can be constituted by a single sheet, by a plurality of sheets joined to one another or can be obtained from the unrolling of a roll or of a pack of sheets folded in an accordion fashion so as to obtain what is termed in the field as "fanfold" or "endless cardboard".

The device 1 is constituted by a first frame 3 which is in turn constituted by a pair of first plates 4a and 4b which are arranged mutually parallel, the cardboard 2 sliding therebetween on a plane which is perpendicular thereto.

A pair of second plates 5 and of third plates 6a and 6b, which protrude perpendicularly to said pair of first plates 4a and 4b in the interspace provided therebetween, are respectively rigidly associated proximate to the lower ends of each of said first plates 4a and 4b.

Said pairs of second and third plates rest on the ground 7 by means of adapted legs 8.

A first pair of shafts 9a and 9b and a second pair of shafts 10a and 10b are associated between each plate of said pair of second plates 5 and each plate of said pair of third plates 6a and 6b.

Said first and second shaft pairs constitute the guide respectively for a first pair of supports 11a and 11b and for a second pair of supports 12a and 12b, the lower supports 11b and 12b being rigidly associated with adapted mutually facing L-shaped brackets 13a and 13b with which uprights 14a and 14b are rigidly associated; at their other end, said uprights are rigidly associated, like the upper supports 11a and 12a, at a base 15, which is arranged parallel to the ground 7, for supporting a counter-blade 16.

Said counter-blade is constituted by a pair of elements 17a and 17b which protrude perpendicularly and longitudinally to the base 15 and are arranged mutually parallel and slightly spaced so as to allow the passage therebetween, along a perpendicular axis, of at least one blade 18.

The device 1 is in fact furthermore constituted by a second frame 19 which is constituted by a first beam 20 which is arranged transversely with respect to the infeed axis of the cardboard 2 and is vertically movable, since the stem 21 of a piston 22 is associated with said beam, preferably in a central position; the body of said piston 22 is rigidly associated, in a downward position, with a second beam 23 which is arranged parallel to the first beam and is rigidly associated, in a downward position, with the brackets 13a and 13b.

The first beam and the second beam 23 are associated, at their ends, respectively by keying and by means of sliding bushes, with a pair of third shafts 24a and 24b which are arranged perpendicularly with respect to the cardboard infeed axis; at least one third beam 25 for supporting one or more blades 18 is furthermore keyed at the upper end to said third shafts.

Said one or more blades can be temporarily associated with the third beam 25 by means of adapted bolts or other known devices: a plurality of blades, slidingly arrangeable at the third beam 25 and lockable in the required position by means of adapted and known locking devices, can be provided in an equivalent manner.

The piston 22 constitutes a means for the vertical movement of the blade 18, since its actuation entails the lifting and lowering of said blade at the underlying interspace provided between the elements 17a and 17b which constitute the counter-blade 16.

Means for the synchronous traction of the blade 18 and of the counter-blade 16 during the step of cutting the cardboard 2 are furthermore associated at the ends of the base 15 which protrude beyond the pair of first plates 4a and 4b; said means are constituted by a sub-frame 26a and 26b which is arranged approximately parallel to the pair of first plates 4a and 4b and has a central hole 27a and 27b which also has a rectangular shape and acts as seat for a square block 28a and 28b which is centrally perforated for connection to a pivot 29a and 29b which protrudes from a U-shaped element 30a and 30b.

Each of said U-shaped elements 30a and 30b is interconnected with an adapted chain 31a and 31b which is arranged on a plane which is approximately parallel to that of the adjacent pair of first plates 4a and 4b and draws its motion by means of a shaft 32a and 32b which is rotated, by means of adapted gears or kinematic systems and/or tension elements, by an adapted motor 33.

The use of the device is thus as follows: once the motor 33 is activated, a movement is imparted, by means of the chain 31a, 31b, the U-shaped element 30a and 30b and the pivot 29a and 29b, to the square blocks 28a and 28b which entrain, in a motion which is practically parallel to the infeed direction of the cardboard 2, the sub-frame 26a and 26b and thus the base 15 and the counter-blade 16 which is associated therewith.

It should be noted that the extension of the chain 31a and 31b is such as to allow the counter-blade 16 to follow, for a certain preset extent, the movement of the cardboard 2, said counter-blade and said cardboard having the same speed in said extent.

However, due to the interconnection between the base 15 and the uprights 14a and 14b, the entire assembly being in turn rigidly associated with the first pair of supports 11a, 11b and the second pair of supports 12a and 12b which can slide at the first pair of shafts 9a, 9b and at the second pair of shafts 10a and 10b, one obtains, during the traction of the sub-frame 26a and 26b, a traction also of the second frame 19 and thus, ultimately, of the blade 18.

This means that, according to a preset cycle, it is possible to impose a movement to the counter-blade 16 of the blade 18 in the same direction of motion as the cardboard 2, giving said three distinct elements the same speed, so that they have a nil relative speed.

During this movement it is thus possible to actuate the piston 22, lowering the blade 18 at the underlying counter-blade 16, thus performing the required cutting of the cardboard 2.

The chain 31a and 31b naturally has a path closed in a loop, so as to reposition the blade and the counter-blade in the region adjacent to the cardboard infeed region once cutting has been performed.

Since in practice the blade, the counter-blade and the cardboard have nil relative speeds in an extent, it is possible to achieve, without stopping the cardboard, an optimum cutting thereof; by virtue of the presence of the piston 22, said cutting can even be performed on very high thicknesses.

The configuration of the blade can naturally be of the saw-tooth, continuous or dentellated type, affecting the entire transverse interspace of the cardboard or part thereof.

It has been observed that the invention has achieved the intended aim and objects, a device having been provided which allows to cut the cardboard without stopping it during its advancement and sending to subsequent possible processes, performing at the same time an optimum cutting even for very high thicknesses.

Furthermore, the use of very simple kinematic systems in the device allows a rapid and easy selection of the optimum region in which cutting is to be performed, the chain transmission allowing to keep said conditions unchanged once they have been preset.

The invention is furthermore structurally simple as well as reliable and safe in use.

The materials and the dimensions which constitute the individual components of the device may naturally be the most pertinent according to the specific requirements.

This is true for the length of the chain 31a and 31b and for the possible dimensions of the sub-frame 26a, 26b and therefore of the related central hole 27a, 27b and of the square block 28a, 28b which oscillates therein to allow the transmission of motion.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Cutting device for the transverse cutting of cardboard webs, the cutting device (1) cooperating with means for continuously feeding the cardboard web (2) along an infeed axis and within a horizontal plane into the cutting device (1), the cutting device (1) comprising a first fixed frame (3, 4a, 4b, 5, 6a, 6b) and a second frame (19, 20, 23, 24a, 24b), the first frame (3, 4a, 4b, 5, 6a, 6b) having guide means (9a, 9b, 10a, 10b) for guiding the second frame (19, 20, 23, 24a, 24b) in a direction along the infeed axis, at least one blade (18) and at least one counterblade (16) being mounted on the second frame (19, 20, 23, 24a, 24b) and being arranged transversely to the infeed axis, the second frame (19, 20, 23, 24a, 24b) comprising means (21, 22, 25) for slideably moving the at least one blade (18) in the vertical direction relative to the second frame (19, 20, 23, 24a, 24b), the means (21, 22, 25) for slideably moving the at least one blade (18) being adapted to be actuated during the sliding movement of the second frame (19, 20, 23, 24a, 24b), the cutting device further comprising traction means (26-33), which provide for a reciprocating movement of the second frame (19, 20, 23, 24a, 24b) along the guide means (9a, 9b, 10a, 10b) and which are synchronized with the means for continuously feeding the cardboard web (2) during the step of cutting, **characterized in that** said traction means (26-33) are separate from said means (21, 22, 25) for slideably moving the at least one blade (18) in the vertical direction and comprise sub-frames (26a, 26b) connected to a base (15), an elongate hole (27a, 27b) formed in each of said sub-frames (26a, 26b), a block (28a, 28b) engaging each elongate hole (27a, 27b), each block (28a, 28b) being pivotally connected to a closed-loop chain (31a, 31b) extending parallel to said guide means (9a, 9b, 10a, 10b) and being driven by a motor (33).

2. Cutting device according to claim 1, characterized in that said second frame (19, 20, 23, 24a, 24b) further comprises uprights (14a, 14b) connected to upper and lower supports (11a, 11b, 12a, 12b) guided on said guide means (9a, 9b, 10a, 10b), and a base (15) interconnecting said uprights (14a, 14b) and supporting said counterblade (16).

3. Cutting device according to claim 1, characterized in that each said block (28a, 28b) is connected to a pivot (29a, 29b) protruding from a U-shaped element (30a, 30b) connected to a respective closed-loop chain (31a, 31b).

4. Cutting device according to claim 1, characterized in that said first frame (3, 4a, 4b, 5, 6a, 6b) comprises a pair of mutually parallel first plates (4a, 4b) defining an interspace therebetween, a pair of second plates (5) protruding from one of said first plates (4a) into the interspace between said first plates (4a, 4b), and a pair of third plates (6a, 6b) protruding from the other of said first plates (4b) towards said second plates (5).

5. Cutting device according to claim 4, characterized in that said guide means (9a, 9b, 10a, 10b) for guiding the second frame (19, 20, 23, 24a, 24b) in a direction along the infeed axis comprise a first pair of shafts (9a, 9b) extending between said second pair of plates (5) and a second pair of shafts (10a, 10b) extending between said third pair of plates (6a, 6b).

6. Cutting device according to claim 2, characterized in that said second frame (19, 20, 23, 24a, 24b) comprises a fixed beam (23) connected to the lower supports (11b, 12b), a vertically movable beam (20) located above said fixed beam (23), and a pair of third shafts (24a, 24b) keyed to the ends of said movable beam (20) and slideably connected to the ends of said fixed beam (23).

7. Cutting device according to claims 1, 2 and 6, characterized in that said means (21, 22, 25) for slideably moving the at least one blade (18) in the vertical direction comprise at least one piston (21, 22) interconnected between said fixed beam (23) and said movable beam (20), and a third beam (25) connected to said movable beam (20) by said pair of third shafts (24a, 24b), said third beam (25) and said blade (18) overlying said base (15) and said counterblade (16).

8. Cutting device according to claims 1 and 7, characterized in that said at least one blade (18) comprises a, plurality of blades (18) slideably connected to said third beam (25), and means for locking each of said plurality of blades (18) at a desired position on said third beam (25).

## Patentansprüche

1. Schneidvorrichtung für das Querschneiden von Pappebahnen, wobei die Schneidvorrichtung (1) mit Einrichtungen zum kontinuierlichen Zuführen der Pappebahn (2) entlang einer Zufuhrachse und innerhalb einer horizontalen Ebene in die Schneidvorrichtung (1) zusammenwirkt, wobei die Schneidvorrichtung (1) einen ersten feststehenden Rahmen (3, 4a, 4b, 5, 6a, 6b) und einen zweiten Rahmen (19, 20, 23, 24a, 24b) umfaßt, wobei der erste Rahmen (3, 4a, 4b, 5, 6a, 6b) Führungseinrichtungen (9a, 9b, 10a, 10b) Zum führen des zweiten Rahmens (19, 20, 23, 24a, 24b) in einer Richtung entlang der Zufuhrachse aufweist, wobei mindestens ein Messer (18) und mindestens ein Gegenmesser (16) auf dem zweiten Rahmen (19, 20, 23, 24a, 24b) angebracht sind und quer zur Zufuhrachse angeordnet sind, wobei der zweite Rahmen (19, 20, 23, 24a, 24b) Einrichtungen (21, 22, 25) umfaßt, um das mindestens eine Messer (18) relativ zum zweiten Rahmen (19, 20, 23, 24a, 24b) in vertikaler Richtung verschiebbar zu bewegen, wobei die Einrichtungen (21, 22, 25) zum verschiebbaren Bewegen des mindestens einen Messers (18) für eine Betätigung während der Verschiebebewegung des zweiten Rahmens (19, 20, 23, 24a, 24b) angepaßt sind, wobei die Schneidvorrichtung weiter Fortbewegungseinrichtungen (26-23) umfaßt, die für eine Hin- und Herbewegung des zweiten Rahmens (19, 20, 23, 24a, 24b) entlang der Führungseinrichtungen (9a, 9b, 10a, 10b) sorgen und die mit den Einrichtungen zum kontinuierlichen Zuführen der Pappebahn (2) während des Schneideschritts synchronisiert sind, dadurch gekennzeichnet, daß die besagten Fortbewegungseinrichtungen (26-33) von den besagten Einrichtungen (21, 22, 25) zum verschiebbaren Bewegen des mindestens einen Messers (18) in vertikaler Richtung getrennt sind und mit einer Basis (15) verbundene Hilfsrahmen (26a, 26b) umfassen, wobei in jedem der besagten Hilfsrahmen (26a, 26b) eine längliche Öffnung (27a, 27b) ausgebildet ist, wobei ein Block (28a, 28b) in jede längliche Öffnung (27a, 27b) eingreift, wobei jeder Block (28a, 28b) schwenkbar mit einer Endloskette (31a, 31b) verbunden ist, die sich parallel zu den besagten Führungseinrichtungen (9a, 9b, 10a, 10b) erstreckt und von einem Motor (33) angetrieben wird.

2. Schneidvorrichtung nach Anspruch 1, dadurch gekennzeichnet, daß der besagte zweite Rahmen (19, 20, 23, 24a, 24b) weiter Ständer (14a, 14b) umfaßt, die mit einer oberen und unteren Halterung (11a, 11b, 12a, 12b) verbunden sind, welche auf den besagten Führungseinrichtungen (9a, 9b, 10a, 10b) geführt sind, sowie eine Basis (15), welche die besagten Ständer (14a, 14b) miteinander verbindet und das besagte Gegenmesser (16) trägt.

3. Schneidvorrichtung nach Anspruch 1, dadurch gekennzeichnet, daß jeder besagte Block (28a, 28b) mit einem Drehzapfen (29a, 29b) verbunden ist, der aus einem U-förmigen Element (30a, 30b) übersteht, welches mit einer jeweiligen Endloskette (31a, 31b) verbunden ist.

4. Schneidvorrichtung nach Anspruch 1, dadurch gekennzeichnet, daß der besagte erste Rahmen (3, 4a, 4b, 5, 6a, 6b) ein Paar zueinander parallele erste Platten (4a, 4b) umfaßt, die einen dazwischenliegenden Zwischenraum begrenzen, wobei ein Paar zweite Platten (5) aus einer der besagten ersten Platten (4a) in den Zwischenraum zwischen den besagten ersten Platten (4a, 4b) übersteht, und ein Paar dritte Platten (6a, 6b) aus der anderen der besagten ersten Platten (4b) in Richtung der besagten zweiten Platten (5) übersteht.

5. Schneidvorrichtung nach Anspruch 4, dadurch gekennzeichnet, daß die besagten Führungseinrichtungen (9a, 9b, 10a, 10b) zum Führen des zweiten Rahmens (19, 20, 23, 24a, 24b) in einer Richtung entlang der Zufuhrachse ein erstes Paar Wellen (9a, 9b) umfassen, die sich zwischen dem besagten zweiten Paar Platten (5) erstrecken, sowie ein zweites Paar Wellen (10a, 10b), die sich zwischen dem besagten dritten Paar Platten (6a, 6b) erstrecken.

6. Schneidvorrichtung nach Anspruch 2, dadurch gekennzeichnet, daß der besagte zweite Rahmen (19, 20, 23, 24a, 24b) einen mit den unteren Halterungen (11b, 12b) verbundenen feststehenden Träger (23), einen oberhalb des besagten feststehenden Trägers (23) angeordneten, vertikal beweglichen Träger (20), sowie ein Paar mit den Enden des besagten beweglichen Trägers (20) verkeilte und mit den Enden des besagten feststehenden Trägers (23) verschiebbar verbundene dritte Wellen (24a, 24b) umfaßt.

7. Schneidvorrichtung nach den Ansprüchen 1, 2 und 6, dadurch gekennzeichnet, daß die besagten Einrichtungen (21, 22, 25) zum verschiebbaren Bewegen des mindestens einen Messers (18) in vertikaler Richtung mindestens einen zwischen den besagten feststehenden Träger (23) und den besagten beweglichen Träger (20) eingesetzten Kolben (21, 22) sowie einen durch das besagte Paar dritte Wellen (24a, 24b) mit dem besagten beweglichen Träger (20) verbundenen dritten Träger (25) umfassen, wobei der besagte dritte Träger (25) und das besagte Messer (18) über der besagten Basis (15) und dem besagten Gegenmesser (16) liegen.

8. Schneidvorrichtung nach den Ansprüchen 1 und 7, dadurch gekennzeichnet, daß das besagte mindestens eine Messer (18) eine Mehrzahl von verschiebbar mit dem besagten dritten Träger (25) verbundenen Messern (18) sowie Einrichtungen zum verriegeln von jedem der besagten Mehrzahl von Messern (18) an einer gewünschten Stelle auf dem besagten dritten Träger (25) umfaßt.

## Revendications

1. Dispositif de coupe pour la coupe transversale de bandes continues de carton, le dispositif de coupe coopérant avec des moyens pour alimenter en continu la bande continue de carton (2), le long d'un axe d'alimentation et selon un plan horizontal, dans le dispositif de coupe (1), le dispositif de coupe (1) comprenant un premier cadre fixe (3, 4a, 4b, 5, 6a, 6b) et un second cadre (19, 20, 23, 24a, 24b), le premier cadre (3, 4a, 4b, 5, 6a, 6b) ayant des moyens de guidage pour guider le second cadre (19, 20, 23, 24a, 24b) dans une direction le long de l'axe d'alimentation, au moins une lame (18) et au moins une contrelame (16) étant montées transversalement par rapport à l'axe d'alimentation, le second cadre (19, 20, 23, 24a, 24b) comprenant des moyens (21, 22, 25) pour déplacer par glissement ladite lame (18) selon la direction verticale par rapport au second cadre (19, 20, 23, 24a, 24b), les moyens (21, 22, 25) pour déplacer par glissement ladite lame (18) étant conçus pour être actionnés lors du mouvement de glissement du second cadre (19, 20, 23, 24a, 24b), le dispositif de coupe comprenant de plus des moyens de traction (26-33) qui permettent un mouvement réciproque du second cadre (19, 20, 23, 24a, 24b) le long des moyens de guidage (9a, 9b, 10a, 10b) et qui sont synchronisés avec les moyens pour alimenter en continu la bande (2) continue de carton, lors de l'étape de coupe, **caractérisé** en ce que les moyens de traction (26-33) sont séparés desdits moyens (21, 22, 25) pour déplacer par glissement ladite lame (18) dans la direction verticale, et comprennent des sous-cadres (26a, 26b) reliés à une base (15), un trou allongé (27a, 27b) formé dans chacun des sous-cadres (26a, 26b), un bloc (28a, 28b) coopérant avec chaque trou allongé (27a, 27b), chaque bloc (28a, 28b) étant relié de manière pivotante à une chaîne fermée (31a, 31b) s'étendant parallèlement auxdits moyens de guidage (9a, 9b, 10a, 10b) et étant entraîné par un moteur (33).

2. Dispositif de coupe selon la revendication 1, caractérisé en ce que ledit second cadre (19, 20, 23, 24a, 24b) comprend de plus des montants (14a, 14b) reliés aux supports supérieurs et inférieurs (11a, 11b, 12a, 12b) guidés sur lesdits moyens de guidage (9a, 9b, 10a, 10b) et une base (15) reliée aux dits montants (14a, 14b) et supportant la dite contrelame (16).

3. Dispositif de coupe selon la revendication 1, caractérisé en ce que chaque bloc (28a, 28b) est relié à un pivot (29a, 29b) faisant saillie au-delà d'un élément en forme de U (30a, 30b) relié respectivement à une chaîne fermée (31a, 31b).

4. Dispositif de coupe selon la revendication 1, caractérisé en ce que le dit premier cadre (3, 4a, 4b, 5, 6a, 6b) comprend une paire de premières plaques mutuellement parallèles (4a, 4b) définissant un espace entre elles, une paire de secondes plaques (5) faisant saillie par rapport à l'une desdites premières plaques (4a) dans ledit espace entre lesdites premières plaques (4a, 4b), et une paire de troisièmes plaques (6a, 6b) faisant saillie par rapport à l'autre desdites premières plaques (4b) en direction des dites secondes plaques (5).

5. Dispositif de coupe selon la revendication 4, caractérisé en ce que les dits moyens de guidage (9a, 9b, 10a, 10b) pour guider le second cadre (19, 20, 23, 24a, 24b) dans une direction le long de l'axe d'alimentation, comportent une première paire d'axes (9a, 9b) s'étendant entre ladite seconde paire de plaques (5) et une seconde paire d'axes (10a, 10b) s'étendant entre ladite troisième paire de plaques (6a, 6b).

6. Dispositif de coupe selon la revendication 2, caractérisé en ce que ledit second cadre (19, 20, 23, 24a, 24b) comprend une poutre fixe (23) reliée aux supports inférieurs (11b, 12b), une poutre déplaçable verticalement (20) située au-dessus de ladite poutre fixe (23), et une paire de troisièmes axes (24a, 24b) tourillonés aux extrémités de ladite poutre déplaçable (20) et reliés à glissement aux extrémités de ladite poutre fixe (23).

7. Dispositif de coupe selon les revendications 1, 2 et 6, caractérisé en ce que les dits moyens (21, 22, 25) pour déplacer par glissement ladite lame (18) dans la direction verticale, comprend au moins un piston (21, 22) relié et solidaire de ladite poutre fixe (23) et de ladite poutre déplaçable (20), et une troisième poutre (25) reliée à ladite poutre déplaçable (20) par ladite paire de troisièmes axes (24a, 24b), ladite troisième poutre (25) et ladite lame (18) s'étendant au dessus de ladite base et de ladite contrelame (16).

8. Dispositif de coupe selon les revendications 1 et 7, caractérisé en ce que ladite lame (18) comporte une pluralité de lames (18) reliées à glissement à ladite troisième poutre (25), et des moyens pour bloquer chacune de la pluralité de lames (18) en une position désirée sur la troisième poutre (25).
